# EUROPEAN PATENT APPLICATION

(11) **EP 4 332 427 A1**
(43) Date of publication of application: **06.03.2024**
(21) Application number: 21939285.9
(22) Date of filing: 28.04.2021
(51) Int. Cl.: F17D 3/00, F23K 5/00

(54) **HYDROGEN SUPPLY-AND-DEMAND MANAGEMENT METHOD AND HYDROGEN SUPPLY-AND-DEMAND MANAGEMENT DEVICE**

(71) Applicant: Hitachi, Ltd., Tokyo 100-8280 (JP)
(72) Inventor: MIZUKAMI, Takaaki, Tokyo 100-8280 (JP); SASAKI, Takashi, Tokyo 100-8280 (JP); KANI, Yuuko, Tokyo 100-8280 (JP); IIZUKA, Hidehiro, Tokyo 100-8280 (JP); ISHIDA, Naoyuki, Tokyo 100-8280 (JP); INAGAKI, Ryohei, Tokyo 100-8280 (JP); FUJITA, Shinji, Tokyo 100-8280 (JP); WATANABE, Ayumi, Tokyo 100-8280 (JP)
(74) Representative: Mewburn Ellis LLP
(86) International application number: PCT/JP2021/017027
(87) International publication number: WO 2022/230124

(57) **Abstract**

In a hydrogen supply and demand management method, a step of supplying, by a supply device (102) of hydrogen, hydrogen to a gas pipeline (1), a step of separating, by a hydrogen supply and demand management device (302), a hydrogen-containing gas having a composition required for a utilization device (201) of hydrogen from the gas pipeline (1), and a step of supplying the hydrogen-containing gas to the utilization device (201) of hydrogen are executed.

## Description

### Technical Field

The present invention relates to a hydrogen supply and demand management method and a hydrogen supply and demand management device, in which a hydrogen supply device and a hydrogen utilization device are connected by a gas pipeline capable of supplying hydrogen and the supply and demand of the hydrogen supply device and the hydrogen utilization device can be managed and operated.

### Background Art

Unlike fossil fuel, hydrogen is clean energy that does not emit carbon dioxide during combustion. Thus, attention has been paid as one of clean energy for global warming countermeasures, and technological development related to production, transportation, and utilization of hydrogen has been advanced.

Under such circumstances, the present application relates to a device and a method for supplying hydrogen produced by electrolysis of water using renewable energy or the like, reforming of natural gas, or the like to a hydrogen utilization device.

As a typical existing method for supplying hydrogen to a hydrogen utilization device, there is an invention described in PTL 1. PTL 1 describes a method for mounting a hydrogen transport vehicle equipped with a dedicated liquid hydrogen tank and transporting the hydrogen to the hydrogen utilization device.

In addition, there are a method for filling a high pressure container with a hydrogen gas and conveying the high pressure container to the hydrogen utilization device by using the transport vehicle or the like, a method for filling a hydrogen storing alloy with hydrogen and conveying the hydrogen storing alloy to the hydrogen utilization device by using the transport vehicle or the like, and the like.

In the invention described in PTL 1, there are concerns about cost required for energy such as high-pressure and low-temperature treatment at the time of filling hydrogen and cost for maintaining a predetermined pressure and temperature for ensuring a vaporization loss and safety at the time of transportation.

In the method using the hydrogen storing alloy, since a weight of the hydrogen storing alloy is heavy (filling density is low) with respect to the amount of storable hydrogen, the hydrogen transport cost increases, and when hydrogen storage and release are repeated depending on a type of the hydrogen storing alloy, material embrittlement occurs. As a result, there is a concern that maintenance cost due to replacement or the like in a case where the amount of stored hydrogen decreases may occur. Further, rare metals such as rare earth elements may be used for the hydrogen storing alloy, and there is a concern about resource shortage and cost increase.

In addition, as a problem common to these methods, in a case where the hydrogen utilization device requires hydrogen, it is necessary to contact a supplier of hydrogen in advance for transportation, and thus, it is complicated.

### Citation List

### Patent Literature

PTL 1: WO 2006/103987 A

### Summary of Invention

### Technical Problem

In the Ministry of the Environment, "demonstration project for production of renewable energy electrolytic hydrogen and supply and utilization of hydrogen mixed gas" was started in 2019. In the present project, hydrogen is produced by electrolysis of water by using electric power of wind power generation, and the hydrogen and simulated gas equivalent to city gas are blended and supplied to a use site through a gas pipe. The blend gas is used as it is in a water heater, a gas stove, or the like. In this project, a method for supplying the blend gas of hydrogen and city gas to the hydrogen utilization device through the gas pipeline is disclosed.

According to this method, problems of various costs required for hydrogen transportation are solved or reduced. However, in a case where the blend gas of hydrogen and city gas is used as it is, carbon dioxide is inevitably discharged from the hydrogen utilization device.

Therefore, an object of the present invention is to satisfy economic efficiency, safety, convenience, and global warming countermeasures regarding supply of hydrogen produced as clean energy.

### Solution to Problem

In order to solve the above problems, a hydrogen supply and demand management method of the present invention includes a step of supplying, by a supply device of hydrogen, hydrogen to a gas pipeline, a step of separating, by a hydrogen supply and demand management device, a hydrogen-containing gas having a composition required for a utilization device of hydrogen from a gas of the gas pipeline, and a step of supplying the hydrogen-containing gas to the utilization device.

A hydrogen supply and demand management device of the present invention includes a hydrogen separation unit that is connected to a gas pipeline capable of supplying hydrogen, and separates hydrogen from a blend gas flowing through the gas pipeline, a return gas introduction unit that returns a gas after hydrogen is separated to the gas pipeline, a flow rate sensor that monitors a gas flow rate, and a gas sensor that monitors a hydrogen concentration of a gas.

Other means will be described in the mode for carrying out the invention.

### Advantageous Effects of Invention

According to the present invention, it is possible to satisfy economic efficiency, safety, convenience, and global warming countermeasures regarding supply of hydrogen produced as clean energy.

### Brief Description of Drawings

[FIG. 1] FIG. 1 is an explanatory diagram of a hydrogen supply and demand management method.
[FIG. 2] FIG. 2 is a diagram illustrating a role of a hydrogen supply and demand management device in a case where a blend gas of natural gas and hydrogen is mixed in a pipeline.
[FIG. 3] FIG. 3 is a configuration diagram of the hydrogen supply and demand management device.
[FIG. 4] FIG. 4 is a configuration diagram of a hydrogen separation unit.
[FIG. 5] FIG. 5 is a configuration diagram of the hydrogen separation unit.
[FIG. 6] FIG. 6 is a configuration diagram of the hydrogen separation unit.
[FIG. 7] FIG. 7 is a diagram for describing gas usage fee calculation.
[FIG. 8] FIG. 8 is a diagram for describing the gas usage fee calculation.

### Description of Embodiments

Hereinafter, embodiments for carrying out the present invention will be described in detail with reference to the drawings. Note that, substantially identical components are denoted by identical reference signs, and the description may be omitted in a case where the description is redundant. In addition, the present invention is not limited to the following embodiments.

### <<First Embodiment>>

In a first embodiment, a hydrogen supply and demand management operation method in the present invention will be described.

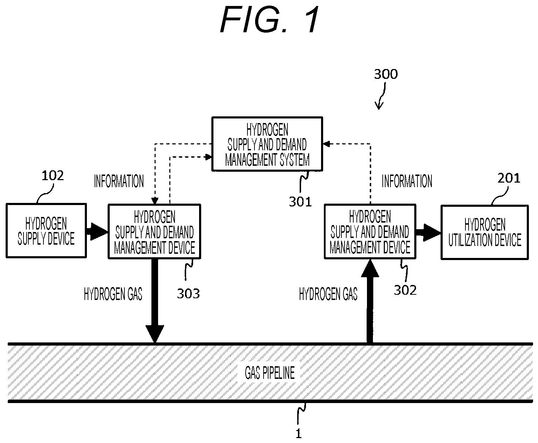

FIG. 1 is an explanatory diagram for describing the hydrogen supply and demand management operation method in the present embodiment.

The hydrogen supply and demand management operation method in the first embodiment is performed by a hydrogen supply and demand management system 301, hydrogen supply and demand management devices 302 and 303, a hydrogen utilization device 201 and a hydrogen supply device 102 using the hydrogen supply and demand management devices illustrated in FIG. 1. Note that, the hydrogen utilization device 201 and the hydrogen supply device 102 are connected to a gas pipeline 1.

The hydrogen utilization device 201 is a device that uses hydrogen, such as a fuel cell, a combustion device, or an engine. The hydrogen supply and demand management device 302 separates a hydrogen-containing gas having a constant composition required by the hydrogen utilization device 201 from a blend gas supplied in the gas pipeline 1, and supplies the hydrogen-containing gas to the hydrogen utilization device 201. Here, the amount of hydrogen extracted from the blend gas supplied in the gas pipeline 1 and the hydrogen-containing gas composition may be adjusted by the hydrogen utilization device 201, or may be adjusted in conjunction with capacity control, level control, and the like on hydrogen using facility side. The hydrogen supply and demand management device 302 performs control such that the supply of the hydrogen-containing gas having the composition required by the hydrogen utilization device even though a hydrogen concentration in the gas pipeline changes. The hydrogen supply and demand management device 302 adjusts the composition of the hydrogen-containing gas to be supplied to the hydrogen utilization device based on the demand for the hydrogen utilization device even though the hydrogen concentration in the gas pipeline changes.

In addition, the hydrogen supply and demand management device 302 measures and records the amount of the used hydrogen-containing gas and the composition thereof, device information of the device, and image information, and transmits these pieces of information to the hydrogen supply and demand management system 301. The transmission method may be performed wirelessly like a smart meter. In addition, an interval at which the hydrogen supply and demand management device 302 transmits the pieces of information to the hydrogen supply and demand management system 301 may be set to a predetermined interval (for example, about 1 minute to 5 minutes), for example, in order to manage the supply and demand of the hydrogen. In a case where data interval is set, an interval at which the amount of used hydrogen is measured is preferably equal to or less than the transmission interval. In addition, data to be transmitted may be processed into an average value, an integrated value, or the like and may be transmitted.

Subsequently, the hydrogen supply device 102 produces hydrogen based on the amount of supplied hydrogen received by the hydrogen supply and demand management system 301 from the hydrogen supply and demand management device 302, or produces hydrogen in accordance with a supply and demand situation of a power supply. The hydrogen supply and demand management device 303 mixes the produced hydrogen and the blend gas and supplies the mixture to the gas pipeline 1.

Hydrogen may be produced by any method such as, but not limited to, a method for producing hydrogen by electrolysis of water using electric power generated by renewable energy, a method for producing hydrogen by subjecting carbon monoxide generated when coal is gasified to a shift reaction and then separating carbon dioxide, and a method for producing hydrogen by steam reforming of natural gas. Note that, in order to realize carbon free, in a case where carbon dioxide is generated in a production procedure, it is preferable to recover carbon dioxide, and convert or store the carbon dioxide into valuable materials. In addition, the hydrogen supply and demand management device 303 measures and records production resources of the hydrogen and the amount of hydrogen supplied to the gas pipeline 1, and transmits these pieces of information to the hydrogen supply and demand management system 301. An interval at which the hydrogen supply and demand management device 303 transmits the pieces of information on the amount of supplied hydrogen to the hydrogen supply and demand management system 301 may be set to a predetermined interval (for example, about 1 minute to 5 minutes), for example, in order to manage the supply and demand of the hydrogen. In a case where data interval is set, an interval at which the amount of supplied hydrogen is measured is preferably equal to or less than the transmission interval.

Finally, the hydrogen supply and demand management system 301 manages data of the amount of used hydrogen received from the hydrogen supply and demand management device 302 and the amount of supplied hydrogen received from the hydrogen supply and demand management device 303. The hydrogen supply and demand management system 301 may use accumulation data thereof to predict the amount of supplied hydrogen or to calculate a usage fee of the hydrogen utilization device 201.

The hydrogen supply and demand management operation method of the first embodiment is adopted, and thus, it is possible to manage and operate the supply and demand of the hydrogen utilization device 201 and the hydrogen supply device 102 connected by the gas pipeline 1.

### <<Second Embodiment>>

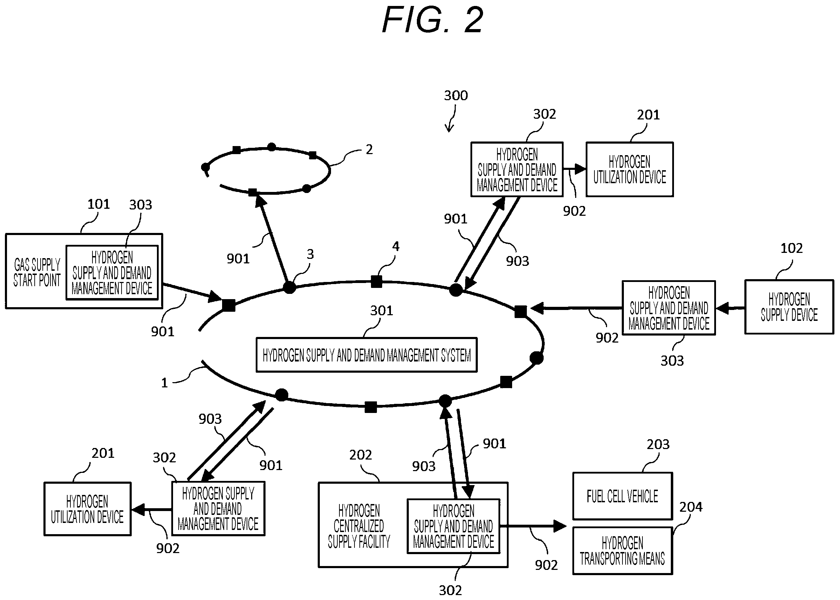

In a second embodiment, a role of the hydrogen supply and demand management device 302 in the present invention will be described. FIG. 2 is a system diagram for describing a hydrogen supply and demand management operation method according to the second embodiment.

As illustrated in FIG. 2, a hydrogen supply and demand management operation system in the present embodiment mainly includes a gas pipeline 1, a hydrogen supply device 102, a hydrogen utilization device 201, a hydrogen supply and demand management system 301, and a hydrogen supply and demand management device 302. Note that, the hydrogen supply device 102 and the hydrogen utilization device 201 are connected to the gas pipeline 1 via the hydrogen supply and demand management device 302. In addition, a blend gas 901 of natural gas and hydrogen is supplied to the gas pipeline 1 from a gas pipeline supply start point 101. In addition, the gas pipeline 1 may also be connected to a gas pipeline 2 in another region.

The hydrogen utilization device 201 connected to the gas pipeline 1 can draw the blend gas 901 from the gas pipeline 1 and can separate and extract a constant-composition hydrogen-containing gas 902 by using the hydrogen supply and demand management device 302. The constant-composition hydrogen-containing gas 902 can be used in facilities using hydrogen, such as a fuel cell, a combustion device, and an engine. The constant-composition hydrogen-containing gas 902 may be a 100% hydrogen gas or a hydrogen-containing gas, but the composition thereof is constant depending on the demand. Here, a flow rate of the constant-composition hydrogen-containing gas 902 to be used may be adjusted by the hydrogen supply and demand management device 302 in accordance with the demand of the hydrogen utilization device 201, or may be adjusted by the hydrogen supply and demand management device 302 in conjunction with capacity control, level control, and the like on the hydrogen using facility side. In addition, regarding the use of the constant-composition hydrogen-containing gas 902, for example, a hydrogen centralized supply facility 202 may extract the constant-composition hydrogen-containing gas 902 from the gas pipeline 1 and may supply the gas to a fuel cell vehicle 203, or may supply the gas to a hydrogen utilization device not connected to the gas pipeline 1 via hydrogen transporting means 204 such as a truck.

A return gas 903 obtained by separating the constant-composition hydrogen-containing gas 902 from the blend gas 901 by using the hydrogen supply and demand management device 302 is adjusted to a temperature and a pressure that can be returned to the gas pipeline 1, and is then returned to the gas pipeline 1. In addition, the hydrogen supply and demand management device 302 measures and records the amount of used constant-composition hydrogen-containing gas 902, and transmits the information to the hydrogen supply and demand management system 301. The transmission method may be performed wirelessly like a smart meter. In addition, an interval at which the hydrogen supply and demand management device 302 transmits the pieces of information to the hydrogen supply and demand management system 301 may be set to a predetermined interval (for example, about 1 minute to 5 minutes), for example, in order to manage the supply and demand of the hydrogen. In a case where data interval is set, an interval at which the amount of used hydrogen is preferably equal to or less than the transmission interval.

Subsequently, the hydrogen supply device 102 produces hydrogen as much as the amount of supplied hydrogen received by the hydrogen supply and demand management device 303 from the hydrogen supply and demand management system 301 or produces hydrogen as much as the amount matching the supply and demand of the power supply, and supplies the produced hydrogen to the gas pipeline 1. Here, since the gas pipeline supply start point 101 also supplies hydrogen, the hydrogen supply and demand management device 303 is provided, and hydrogen is produced based on the amount of supplied hydrogen received from the hydrogen supply and demand management system 301, or hydrogen as much as the amount corresponding to the supply and demand of the power supply is produced, and the produced hydrogen is supplied to the gas pipeline 1.

Hydrogen may be produced by any method such as, but not limited to, a method for producing hydrogen by electrolysis of water using electric power generated by renewable energy, a method for producing hydrogen by subjecting carbon monoxide generated when coal is gasified to a shift reaction and then separating carbon dioxide, and a method for producing hydrogen by steam reforming of natural gas.

Note that, in order to realize carbon free, in a case where carbon dioxide is generated in a production procedure, it is preferable to recover carbon dioxide, and convert or store the carbon dioxide into valuable materials. In addition, the hydrogen supply and demand management device 302 measures and records the amount of hydrogen supplied to the gas pipeline 1, and transmits the information to the hydrogen supply and demand management system 301. An interval at which the hydrogen supply and demand management device 302 transmits the information on the amount of supplied hydrogen may be set to a predetermined interval (for example, about 1 minute to 5 minutes), for example, in order to manage the supply and demand of the hydrogen. In a case where data interval is set, an interval at which the amount of supplied hydrogen is measured is preferably equal to or less than the transmission interval.

Finally, the hydrogen supply and demand management system 301 manages data of the amount of used hydrogen and the amount of supplied hydrogen received from the hydrogen supply and demand management device 302. The hydrogen supply and demand management system 301 may use accumulation data thereof to predict the amount of supplied hydrogen or to calculate a usage fee of the hydrogen utilization device 201.

The hydrogen supply and demand management operation method of the present embodiment is adopted, and thus, it is possible to manage and operate the supply and demand of the hydrogen utilization device 201 and the hydrogen supply device 102 connected by the gas pipeline 1.

### «Third Embodiment»

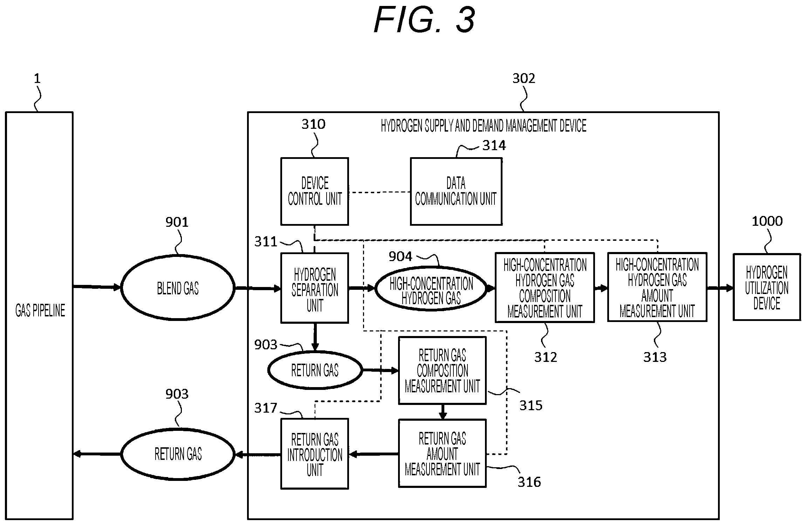

FIG. 3 is a configuration diagram of the hydrogen supply and demand management device 302.

The hydrogen supply and demand management device 302 includes a device control unit 310, a hydrogen separation unit 311, a high-concentration hydrogen gas composition measurement unit 312, a high-concentration hydrogen gas amount measurement unit 313, a data communication unit 314, a return gas composition measurement unit 315, a return gas amount measurement unit 316, and a return gas introduction unit 317.

The device control unit 310 is a part that acquires operation data of the hydrogen supply and demand management device 302 itself and integrally controls the device. The hydrogen separation unit 311 is connected to a gas pipeline capable of supplying hydrogen, and separates the blend gas flowing through the gas pipeline into hydrogen and another return gas.

The high-concentration hydrogen gas composition measurement unit 312 is a gas sensor that monitors the hydrogen concentration of the gas separated by the hydrogen separation unit 311, and is an outlet gas composition measurement unit that measures a composition of a purified gas prepared by the hydrogen separation unit 311 to have a predetermined concentration.

The high-concentration hydrogen gas amount measurement unit 313 is a flow rate sensor that monitors a gas flow rate, and is an outlet gas flow rate measurement unit that measures a flow rate of the purified gas.

The data communication unit 314 transmits operation data and receives data.

The return gas composition measurement unit 315 is a gas sensor that monitors a composition of the return gas. The return gas amount measurement unit 316 is a flow rate sensor that monitors a flow rate of the return gas. The return gas introduction unit 317 adjusts a temperature, a pressure, a flow velocity, and the like of the return gas, and returns the gas to the gas pipeline 1.

In the present embodiment, the blend gas contains hydrogen and natural gas.

The device control unit 310 executes overall information aggregation and control management of the hydrogen supply and demand management device 302. Under the control of the device control unit 310, hydrogen is supplied to a hydrogen utilization device 1000 in the following procedure.

(Procedure 1) The blend gas 901 flows from the gas pipeline 1 into the hydrogen supply and demand management device 302.
(Procedure 2) The hydrogen separation unit 311 in the hydrogen supply and demand management device 302 separates the blend gas 901 into a high-concentration hydrogen gas 904 and a return gas 903 having a low hydrogen concentration.
(Procedure 3) The high-concentration hydrogen gas 904 is supplied to the high-concentration hydrogen gas composition measurement unit 312, and the gas composition is measured by the high-concentration hydrogen gas composition measurement unit 312. Thereafter, the high-concentration hydrogen gas 904 is supplied to the high-concentration hydrogen gas amount measurement unit 313, the amount of gas is measured, and then the high-concentration hydrogen gas is supplied to the hydrogen utilization device 1000.

In order to separate hydrogen and natural gas from the blend gas, the hydrogen separation unit 311 includes a separation mechanism such as a hydrogen separation membrane method, a pressure swing adsorption (PSA) separation method, or a temperature swing adsorption (TSA) separation method.

Further, the hydrogen separation unit 311 preferably includes a mechanism that performs pressurization, depressurization, heating, cooling, and the like to meet conditions (temperature, pressure, and the like) suitable for the separation method.

(Procedure 4) The return gas 903 is supplied to the return gas composition measurement unit 315 to measure the gas composition, and is supplied to the return gas amount measurement unit 316 to measure the amount of gas. Thereafter, the return gas 903 is returned to the gas pipeline 1 after the temperature, the pressure, the flow velocity, and the like are adjusted by the return gas introduction unit 317.

(Procedure 5) Data such as the composition and flow rate of the high-concentration hydrogen gas 904, the composition and flow rate of the return gas 903, device information, and an image are aggregated in the device control unit 310, and are supplied to the hydrogen supply and demand management system 301 through the data communication unit 314 based on information from the device control unit 310.

### <<Fourth Embodiment>>

In the present embodiment, the hydrogen separation unit 311 in the present invention will be described.

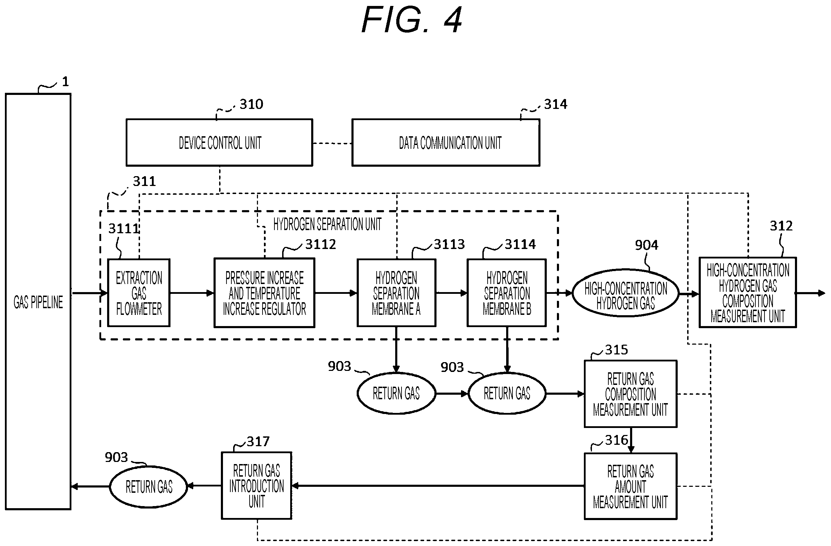

FIG. 4 is a diagram in which hydrogen separation membranes in the present embodiment are formed in multiple stages.

As illustrated in FIG. 4, the hydrogen separation unit 311 includes a hydrogen separation membrane A (3113) and a hydrogen separation membrane B (3114), and includes multi-stage hydrogen separation membranes. A hydrogen gas having a higher concentration can be obtained by forming the hydrogen separation membranes in multiple stages.

In addition, the hydrogen separation unit 311 includes a plurality of hydrogen separation membranes having different hydrogen separation coefficients. The hydrogen separation membrane B (3114) having a larger hydrogen separation coefficient than the hydrogen separation membrane A (3113) is installed at the subsequent stage of the hydrogen separation membrane A (3113), and thus, it is possible to extract a larger amount of hydrogen gas having a higher concentration than in a case where the hydrogen separation membranes having the same hydrogen separation coefficient are used.

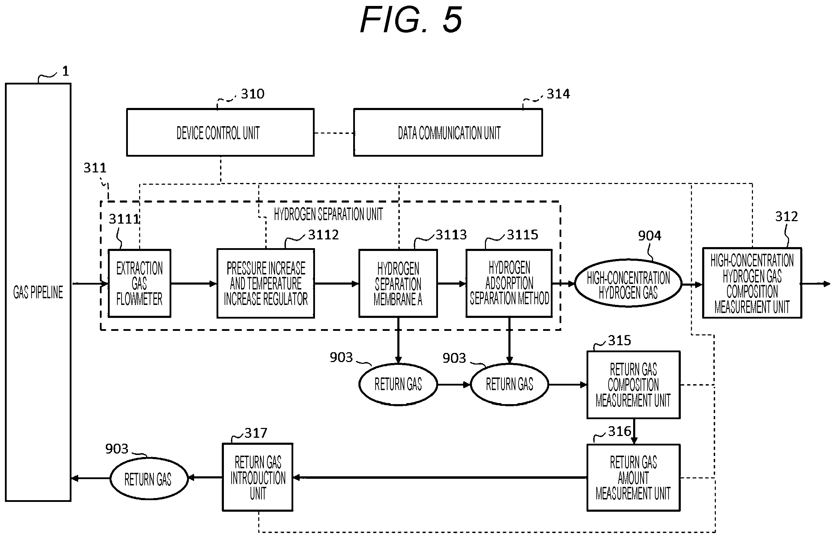

Further, as illustrated in FIG. 5, the hydrogen separation unit 311 includes a hydrogen separation membrane and a hydrogen adsorption or hydrogen absorption separator. When a hydrogen adsorption separation unit 3115 that adsorbs and separates hydrogen by the pressure swing adsorption (PSA) separation method, the temperature swing adsorption (TSA) separation method, or the like is installed at the subsequent stage of the hydrogen separation membrane A (3113), ultra-high purity hydrogen at a level of 99.9998% that can be directly supplied to a fuel cell vehicle can be extracted.

On the other hand, the device control unit 310 can stably supply the hydrogen-containing gas having the gas composition required for the hydrogen utilization device 201 by controlling, as parameters, hydrogen concentration, flow rate, temperature, and pressure conditions of an inlet gas of the hydrogen separation membrane based on a value of the hydrogen concentration measured by the high-concentration hydrogen gas composition measurement unit 312.

### <<Fifth Embodiment>>

In the present embodiment, the control of the hydrogen concentration of the high-concentration hydrogen gas 904 in the hydrogen separation unit 311 in the present invention will be described.

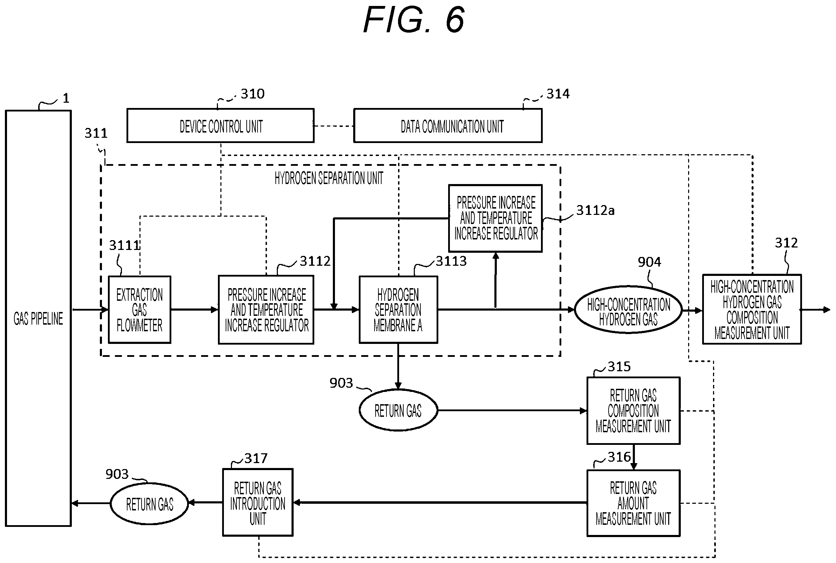

FIG. 6 illustrates a configuration in which the high-concentration hydrogen-containing gas extracted from the hydrogen separation membrane A 3113 is recycled to an inlet of the hydrogen separation membrane A 3113 by a temperature increase and pressure increase regulator 3112a in the present embodiment. This recycling configuration is referred to herein as a first returning unit.

The device control unit 310 can dynamically change the hydrogen concentration of the high-concentration hydrogen gas 904 by controlling the amount of the high-concentration hydrogen gas 904 to be recycled to the inlet of the hydrogen separation membrane A 3113 in the first returning unit based on the value of the hydrogen concentration measured by the high-concentration hydrogen gas composition measurement unit 312. That is, in a case where the gas separated by the hydrogen separation unit 311 is lower than a predetermined hydrogen concentration, the device control unit 310 returns the gas having the higher hydrogen concentration after the hydrogen separation to the inlet of the hydrogen separation membrane by the first returning unit, and thus, the hydrogen supply and demand management device 302 can adjust the hydrogen concentration without increasing cost.

In addition, in a case where a low-concentration hydrogen gas is required in the hydrogen utilization device 201, the temperature increase and pressure increase regulator is disposed in the return gas 903, and the device control unit 310 controls the amount of the low concentration hydrogen gas to be recycled. Accordingly, the hydrogen concentration of the low concentration hydrogen gas can be dynamically changed. That is, in a case where the gas separated by the hydrogen separation unit 311 has a hydrogen concentration higher than a predetermined hydrogen concentration, the device control unit 310 returns the gas having a lower hydrogen concentration after the hydrogen separation to the inlet of the hydrogen separation membrane by the first returning unit. Accordingly, the hydrogen supply and demand management device 302 can adjust the hydrogen concentration without increasing cost.

### «Modification Example 1»

Note that, the present invention is not limited thereto, and the hydrogen supply and demand management device 302 may include a hydrogen storage tank that stores the separated hydrogen and an off-gas storage tank that stores a gas after hydrogen is separated. At this time, a first mixing unit is provided between the hydrogen storage tank and the outlet of the hydrogen separation unit 311. A second mixing unit is provided between the off-gas storage tank and the outlet of the hydrogen separation unit 311.

In a case where the gas separated by the hydrogen separation unit 311 is lower than a predetermined hydrogen concentration, the device control unit 310 causes the first mixing unit to mix the gas in the hydrogen storage tank. The device control unit 310 monitors the hydrogen concentration of the gas after the hydrogen separation, and causes the second mixing unit to mix the gas in the off-gas storage tank in a case where the hydrogen concentration is higher than the predetermined hydrogen concentration. Accordingly, the hydrogen supply and demand management device 302 can adjust the hydrogen concentration without increasing cost.

### «Modification Example 2»

The hydrogen supply and demand management device 302 may include a third mixing unit provided between the gas pipeline 1 and the outlet of the hydrogen separation unit 311. The device control unit 310 monitors the hydrogen concentration of the gas after the hydrogen separation, and causes the third mixing unit to mix the gas introduced from the gas pipeline 1 in a case where the hydrogen concentration is higher than the predetermined hydrogen concentration. Accordingly, the hydrogen supply and demand management device 302 can adjust the hydrogen concentration without increasing cost.

### <<Sixth Embodiment>>

In the present embodiment, an example of a fee charging method using the hydrogen supply and demand management device 302 of the present invention will be described. In order to extract a gas having a predetermined concentration from a gas pipeline through which a mixed gas containing hydrogen flows and to use the gas in a hydrogen application owned by each user, it is necessary to prepare the gas to have a concentration corresponding to the specification of the application, and an outline and features of the hydrogen separation system of the present invention that prepares the gas to have the gas concentration corresponding to a use application are as described above. In addition, in a case where only a kind of gas is handled as in a natural gas pipeline in the related art, it is not necessary to perform gas separation, and the amount of gas used by the user is equal to the amount of gas extracted from the pipeline, and a monthly usage charge of the user can be easily calculated by multiplying a unit price of the natural gas by the amount of gas extracted from the gas pipeline.

On the other hand, in a case where a gas pipeline in which various components are mixed is prepared to have a predetermined component concentration and is used, since the gas that is not separated and used in the hydrogen application is returned to the gas pipeline again, the amount of used gas and the amount of extracted gas are not equal. In addition, since the gas component concentration prepared for each user is different, the amount of each gas component used in the hydrogen application is different. Since the unit price is different for each gas component, the usage fee calculation of the user becomes very complicated. The present embodiment illustrates an example of a method for solving the above problem.

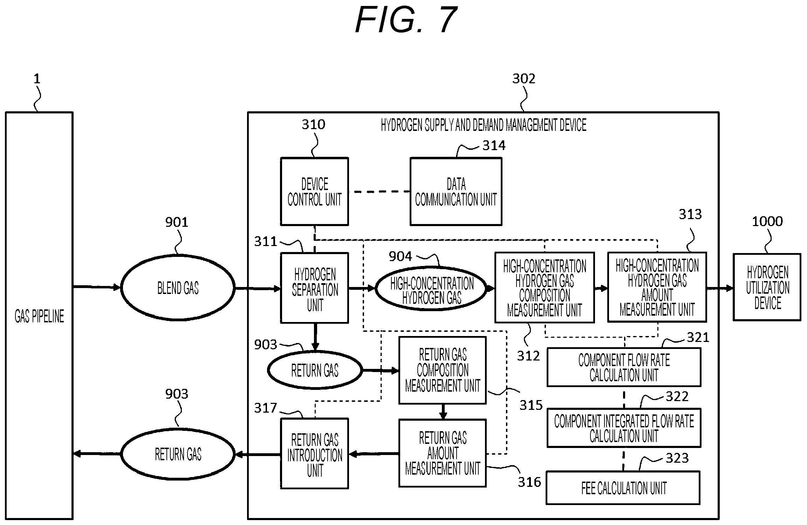

FIG. 7 illustrates a system configuration diagram.

The hydrogen supply and demand management device 302 includes a component flow rate calculation unit 321 that calculates a flow rate of each component from a composition and a flow rate in the purified gas, a component integrated flow rate calculation unit 322 that calculates an integrated flow rate of each component of the purified gas, and a fee calculation unit 323 that calculates a fee from a market value and an integrated flow rate of each component of the purified gas.

The blend gas 901 containing hydrogen is supplied from the gas pipeline 1 to the hydrogen supply and demand management device 302. The hydrogen supply and demand management device 302 purifies the gas to have a gas concentration corresponding to the specification of the hydrogen utilization device 1000, and obtains the high-concentration hydrogen gas 904. The gas separated in the procedure of preparing the high-concentration hydrogen gas 904 is returned as the return gas 903 to the gas pipeline 1. The high-concentration hydrogen gas composition measurement unit 312 of the hydrogen supply and demand management device 302 measures hydrogen and a composition other than hydrogen in the high-concentration hydrogen gas 904. The high-concentration hydrogen gas amount measurement unit 313 measures the flow rate of the entire high-concentration hydrogen gas 904. Accordingly, it is possible to calculate the concentration of the hydrogen or, for example, the natural gas other than the hydrogen and the flow rate of the high-concentration hydrogen gas 904.

Note that, in the present embodiment, although the high-concentration hydrogen gas amount measurement unit 313 is installed in a downstream part of the high-concentration hydrogen gas composition measurement unit 312, the present invention is not limited to this disposition, and for example, the positions of both the measurement units may be reversed.

The high-concentration hydrogen gas composition measurement unit 312 is an outlet gas composition measurement unit that measures the composition of the purified gas prepared to have the predetermined concentration. A general gas analyzer, for example, a gas chromatograph or Fourier transform infrared spectroscopy (FT-IR) can be used as the high-concentration hydrogen gas composition measurement unit 312. The concentration analysis is desirably performed continuously, but may be performed intermittently, for example, once every 10 minutes.

The high-concentration hydrogen gas amount measurement unit 313 is an outlet gas flow rate measurement unit that measures the flow rate of the purified gas. A general flowmeter, for example, an orifice flowmeter or a vortex flowmeter can be used as the high-concentration hydrogen gas amount measurement unit 313. Both a concentration meter and a flowmeter are not limited to the meters described above. Measurement results of the high-concentration hydrogen gas composition measurement unit 312 and the high-concentration hydrogen gas amount measurement unit 313 are sent to the component flow rate calculation unit 321, and the flow rate of each component is calculated from the concentration and the flow rate of each gas component. The results are sent to the component integrated flow rate calculation unit 322, and the integrated flow rate is calculated and accumulated in consideration of a time when each component is supplied to the hydrogen utilization device 1000.

The fee calculation unit 323 calculates a gas usage fee by multiplying the flow rate of each component of the gas supplied to the hydrogen utilization device 1000 as a final application by the unit price of the gas component. In addition, it is possible to calculate the amount of emitted CO₂ from the application by accurately grasping the gas component and amount used by each user, and it is possible to grasp the contribution of each user to the decarbonization.

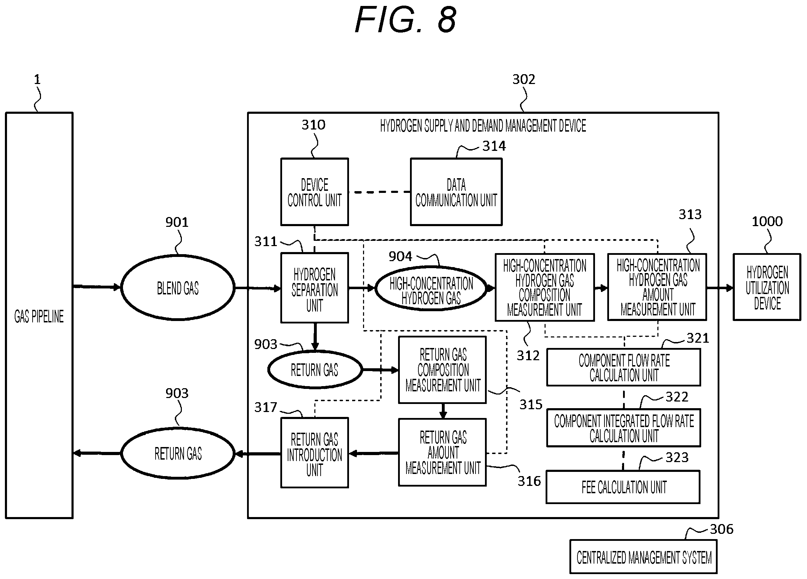

FIG. 8 illustrates another system configuration diagram for realizing the idea of the present embodiment. In FIG. 8, each of the high-concentration hydrogen gas composition measurement unit 312 and the high-concentration hydrogen gas amount measurement unit 313 has a communication function, and the concentration and the flow rate information measured by each measurement unit are transmitted to a centralized management system 306. The centralized management system 306 calculates and stores a used component integrated flow rate for each user. With this system, the gas usage fee of each user can be centrally managed.

### (Modification Example)

The present invention is not limited to the aforementioned embodiments, and includes various modification examples. For example, the aforementioned embodiments are described in detail in order to facilitate easy understanding of the present invention, and are not limited to necessarily include all the described components. Some of the components of a certain embodiment can be substituted into the components of another embodiment, and the components of another embodiment can be added to the component of a certain embodiment. In addition, the components of another embodiment can be added, removed, and substituted to, from, and into some of the components of the aforementioned embodiments.

A part or all of the aforementioned configurations, functions, processing units, and processing means may be realized by hardware such as an integrated circuit, for example. Each of the aforementioned configurations and functions may be realized by software by interpreting and executing a program that realizes each function by the processor. Information of programs, tables, files, and the like for realizing the functions can be stored in a recording device such as a memory, a hard disk, or a solid state drive (SSD), or a recording medium such as a flash memory card, or a digital versatile disk (DVD).

In each of the embodiments, control lines and information lines illustrate lines which are considered to be necessary for the description, and not all the control lines and information lines in a product are necessarily illustrated. Almost all the configurations may be considered to be actually connected to each other.

### Reference Signs List

- 1: gas pipeline
- 2: gas pipeline (another region)
- 3: gas pipeline branch point
- 4: gas pipeline junction
- 101: gas pipeline supply start point
- 102: hydrogen supply device
- 201: hydrogen utilization device
- 202: hydrogen centralized supply facility
- 203: fuel cell vehicle
- 204: hydrogen transporting means
- 301: hydrogen supply and demand management system
- 302: hydrogen supply and demand management device
- 306: centralized management system
- 310: device control unit
- 3101: system control unit
- 311: hydrogen separation unit
- 3111: extraction gas flowmeter
- 3112: temperature increase and pressure increase regulator
- 3113: hydrogen separation membrane A
- 3114: hydrogen separation membrane B
- 3115: hydrogen adsorption separation unit
- 312: high-concentration hydrogen gas composition measurement unit
- 3121: pressure, temperature, and flow rate regulator
- 313: high-concentration hydrogen gas amount measurement unit
- 314: data communication unit
- 315: return gas composition measurement unit
- 316: return gas amount measurement unit
- 317: return gas introduction unit
- 321: component flow rate calculation unit
- 322: component integrated flow rate calculation unit
- 401: centralized management system
- 901: blend gas
- 902: constant-composition hydrogen-containing gas
- 903: return gas
- 904: high-concentration hydrogen gas
- 1000: hydrogen utilization device (fuel cell and the like)

## Claims

1. A hydrogen supply and demand management method comprising:
a step of supplying, by a supply device of hydrogen, hydrogen to a gas pipeline;
a step of separating, by a hydrogen supply and demand management device, a hydrogen-containing gas having a composition required for a utilization device of hydrogen from a gas of the gas pipeline; and
a step of supplying the hydrogen-containing gas to the utilization device.

2. The hydrogen supply and demand management method according to claim 1, further comprising
a step of adjusting, by the hydrogen supply and demand management device, a composition of the hydrogen-containing gas to be supplied to the utilization device based on demand of the utilization device.

3. The hydrogen supply and demand management method according to claim 1, further comprising
a step of supplying, by the hydrogen supply and demand management device, the hydrogen-containing gas having the composition required for the utilization device even though a hydrogen concentration in the gas pipeline changes.

4. The hydrogen supply and demand management method according to claim 1, further comprising
a step of adjusting, by the hydrogen supply and demand management device, a composition of the hydrogen-containing gas to be supplied to the utilization device based on demand of the utilization device even though a hydrogen concentration in the gas pipeline changes.

5. A hydrogen supply and demand management device comprising:
a hydrogen separation unit that is connected to a gas pipeline capable of supplying hydrogen, and separates hydrogen from a blend gas flowing through the gas pipeline;
a return gas introduction unit that returns a gas after hydrogen is separated to the gas pipeline;
a flow rate sensor that monitors a gas flow rate; and
a gas sensor that monitors a hydrogen concentration of a gas.

6. The hydrogen supply and demand management device according to claim 5, wherein the hydrogen separation unit includes a hydrogen separation membrane.

7. The hydrogen supply and demand management device according to claim 6, wherein the hydrogen separation unit includes multi-stage hydrogen separation membranes.

8. The hydrogen supply and demand management device according to claim 6, wherein the hydrogen separation unit includes a plurality of hydrogen separation membranes having different hydrogen separation coefficients.

9. The hydrogen supply and demand management device according to claim 6, wherein the hydrogen separation unit includes a hydrogen separation membrane and a hydrogen adhesion or hydrogen adsorption separator.

10. The hydrogen supply and demand management device according to claim 6, further comprising
a device control unit that controls a hydrogen concentration of hydrogen separated by the hydrogen separation unit or a hydrogen concentration of a gas after hydrogen is separated, with hydrogen concentration, flow rate, temperature, and pressure conditions of an inlet gas of the hydrogen separation membrane as parameters.

11. The hydrogen supply and demand management device according to claim 10, further comprising
a first returning unit that returns the gas separated by the hydrogen separation unit to an inlet of the hydrogen separation membrane,
wherein the device control unit returns the gas after the hydrogen separation by the first returning unit in a case where the gas separated by the hydrogen separation unit does not reach a predetermined hydrogen concentration.

12. The hydrogen supply and demand management device according to claim 11, wherein the device control unit returns a gas having a higher hydrogen concentration after hydrogen separation to the inlet of the hydrogen separation membrane by the first returning unit in a case where the gas separated by the hydrogen separation unit is lower than the predetermined hydrogen concentration.

13. The hydrogen supply and demand management device according to claim 11, wherein the device control unit returns a gas having a lower hydrogen concentration after hydrogen separation to the inlet of the hydrogen separation membrane by the first returning unit in a case where the gas separated by the hydrogen separation unit is higher than the predetermined hydrogen concentration.

14. The hydrogen supply and demand management device according to claim 10, further comprising:
a hydrogen storage tank that stores the separated hydrogen; and
an off-gas storage tank that stores the gas after hydrogen is separated.

15. The hydrogen supply and demand management device according to claim 14, further comprising
a first mixing unit that is provided between the hydrogen storage tank and an outlet of the hydrogen separation unit,
wherein the device control unit causes the first mixing unit to mix a gas of the hydrogen storage tank in a case where the gas separated by the hydrogen separation unit is lower than a predetermined hydrogen concentration.

16. The hydrogen supply and demand management device according to claim 14, further comprising
a second mixing unit that is provided between the off-gas storage tank and an outlet of the hydrogen separation unit,
wherein the device control unit monitors a hydrogen concentration of the gas after hydrogen separation, and causes the second mixing unit to mix the gas of the off-gas storage tank in a case where the hydrogen concentration is higher than the predetermined hydrogen concentration.

17. The hydrogen supply and demand management device according to claim 10, further comprising
a third mixing unit that is provided between the gas pipeline and an outlet of the hydrogen separation unit,
wherein the device control unit monitors a hydrogen concentration of a gas after hydrogen separation, and causes the third mixing unit to mix a gas introduced from the gas pipeline in a case where the hydrogen concentration is higher than a predetermined hydrogen concentration.

18. The hydrogen supply and demand management device according to claim 5, further comprising:
an outlet gas composition measurement unit that measures a composition of a purified gas prepared to have a predetermined concentration;
an outlet gas flow rate measurement unit that measures a flow rate of the purified gas;
a component flow rate calculation unit that calculates a flow rate of each component from a composition and a flow rate in the purified gas;
a component integrated flow rate calculation unit that calculates an integrated flow rate of each component of the purified gas; and
a fee calculation unit that calculates a fee from a market value and an integrated flow rate of each component of the purified gas.
